# EUROPÄISCHE PATENTANMELDUNG

(11) **EP 0 808 039 A2**
(43) Veröffentlichungstag der Anmeldung: **19.11.1997**
(21) Anmeldenummer: 97107311.9
(22) Anmeldetag: 02.05.1997
(51) Int. Cl.: H04B 10/00

(54) **Optische Schnittstelle**

(30) Priorität: 17.05.1996 DE 19619927
(71) Anmelder: SIEMENS AKTIENGESELLSCHAFT, 80333 München (DE)
(72) Erfinder: Puchta, Ralf, Dipl.-Ing. (FH), 93053 Regensburg (DE); Klein, Hans-Wilhelm , Dipl.-Ing., 97078 Würzburg (DE); Menten, Frank, Dipl.-Ing. (FH), 93053 Regensburg (DE)

(57) **Zusammenfassung**

Zur bauteilemindernden und damit kostengünstigen Ausführung einer optischen Schnittstelle mit optischer Datenübertragung zwischen je einem ersten Sender-Empfänger-Pärchen (S1;E1), insbesondere einer mobilen Programmier- und/oder Diagnoseeinrichtung (DE), und einem zweiten Sender-Empfänger-Pärchen (S2;E2), insbesondere einer optoelektronischen Kochstellensteuerung (MC) eines Herdes, ist für mindestens einen der beiden Sender (S1 bzw.S2) eine an sich vorhandene optische aktive Anzeigevorrichtung, insbesondere eine LED-Anzeigevorrichtung (LED1), mitbenutzt.

## Beschreibung

Die Erfindung bezieht sich auf eine optische Schnittstelle, gemäß Patentanspruch 1.

Durch die DE-A1-39 21 344 ist ein externes Progammiergerät für eine Datenein- bzw. Datenausgabe zum Programmieren von Systemen zur Prozeßsteuerung oder dergleichen bekannt, dessen Ankopplung an die zu programmierende Einheit als optisch arbeitende Schittstelle mit beidseitig geschlossenen Berührungsflächen und gegenseitig einander zuordenbaren Licht-Sendern bzw. Licht-Sensoren ausgebildet ist.

Elektronische Einrichtungen, die Signale von durch optische Schnittstellen übertragenen Stellbefehlen verarbeiten, sind oftmals auch an Anzeigevorrichtungen in Form von optisch aktiven Leuchten, insbesondere selbstleuchtenden LED-Anzeigen bzw. hintergrundbeleuchteten LCD-Anzeigen, angeschlossen, die diese Stellbefehle anzeigen. So wird in der DE 39 09 126 A1 ein Schaltgerät für einen Kochherd mit einer Infrarot- oder Ultraschallsignalübertragung zwischen einer Bedieneinheit in einer Dunstabzugshaube über dem Kochherd einerseits und einem Leistungsschaltteil in dem Kochherd andererseits beschrieben, wobei die Bedieneinheit eine zusätzliche Kontrolleinrichtung zur Anzeige einer Unterbrechung der Signalübertragung und/oder zur Anzeige der tatsachlich eingeschalteten Kochfelder aufweist.

In der deutschen Patentanmeldung mit dem amtlichen Aktenzeichen 196 03 295.4 ist bereits eine optoelektronische Kochstellensteuerung mit einer optischen Schnittstelle vorgeschlagen worden, über die eine Programmier- und/oder eine Diagnoseeinheit mit einer Kochstellensteuerung ohne Notwendigkeit einer elektrischen Leitungs- bzw. Steckereinrichtung Daten austauschen kann.

Gemäß Aufgabe vorliegender Erfindung soll bei Vorrichtungen mit integrierter optischer Schnittstelle und mit optisch aktiver Anzeigevorrichtung, insbesondere in Form einer LED-Anzeige bzw. einer LCD-Anzeige, der Bauteile- und damit Kostenaufwand gemindert werden.

Die Lösung dieser Aufgabe gelingt durch eine optische Schnittstelle gemäß Patentanspruch 1; vorteilhafte Ausgestaltungen der Erfindung sind jeweils Gegenstand der Unteransprüche.

Durch die erfindungsgemäße Mitbenutzung einer an sich zur Anzeige, z.B. zur Anzeige einer Einstellung oder einer Betriebsart, vorhandenen optischen aktiven Leuchten, insbesondere in Form einer LED-Anzeige bzw. hintergrundbeleuchteten LCD-Anzeige, als Sender der optischen Schnittstelle kann deren Bauteileaufwand in vorteilhafter Weise gemindert werden; zweckmäßigerweise ist die mitbenutzte Anzeigevorrichtung für die eigentliche Datenübertragung mit einem hochfrequenten, insbesondere pulsweitenmodulierten, Wechselsignal und für die beleuchtete Anzeige einer Einstellung bzw. Betriebsart mit einem niederfrequenten Wechselsignal bzw. einem Gleichsignal gespeist.

Die Erfindung sowie weitere vorteilhafte Ausgestaltungen der Erfindung gemäß Merkmalen der Unteransprüche werden im folgenden anhand eines schematisch dargestellten Ausführungsbeispiels in der Zeichnung näher erläutert; darin zeigen:
- FIG 1: Eine optische Schnittstelle mit auf eine Ceran-Abdeckscheibe einer Kochstellensteuerung aufgesetzter externer Programmier- und/oder Diagnoseeinheit;
- FIG 2: das Blockschaltbild einer optischen Schnittstelle gemaß FIG 1 mit gleichzeitig deren einem Teil zugeordneten Anzeigevorrichtungen;
- FIG 3: das Blockschaltbild gemaß FIG 2 mit erfindungsgemäßer Doppelnutzung einer Anzeigevorrichtung.

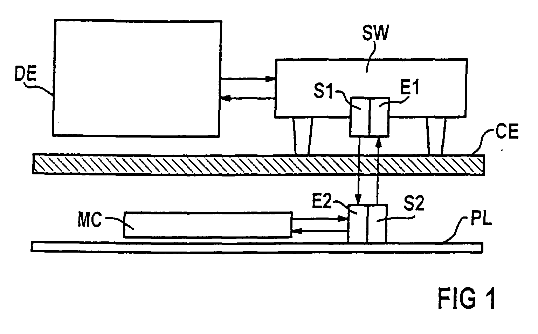

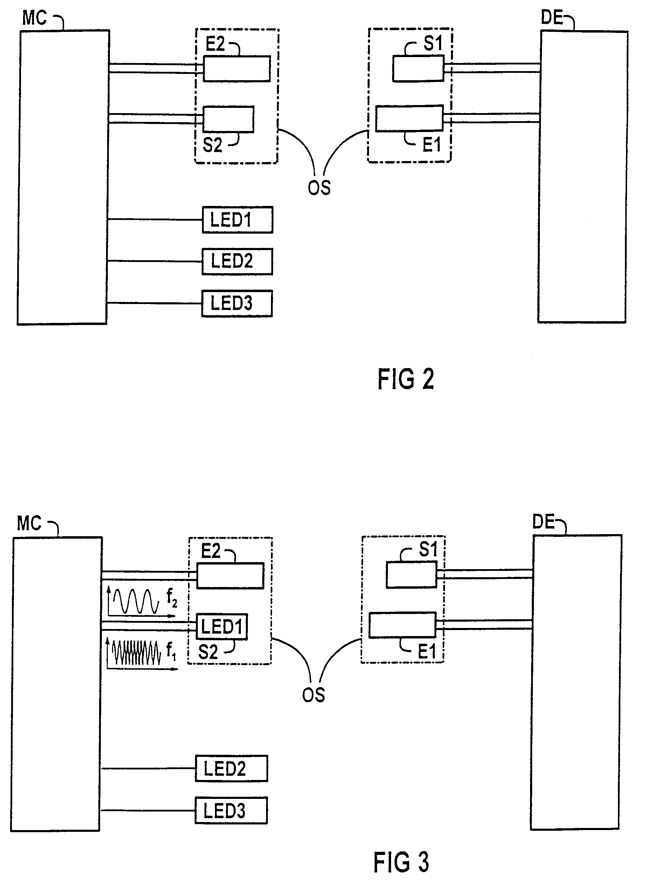

FIG 1 zeigt in der baulichen Anwendungsfiguration und FIG 2 ausschnittsweise im zugehörigen Blockschaltbild eine bidirektionale optische Schnittstelle OS zwischen einer externen Programmier- und/oder Diagnoseeinheit DE oberhalb einer als Schutzabdeckung vorgesehenen strahlungsdurchlässigen Ceran-Scheibe CE einerseits und einer Steuereinheit MC in Form eines Mikro-Controllers unterhalb der Ceran-Scheibe CE als Bestandteil einer auf einer Platine PL angeordneten und verschalteten optoelektronischen Kochstellensteuerung andererseits. Zur bidirektionalen optischen Datenübertragung der Schnittstelle dienen auf der Oberseite der Ceran-Scheibe CE ein erster Sender S1 sowie ein erster Empfänger E1 sowie unterhalb der Ceran-Scheibe CE ein dem ersten Sender S1 zugeordneter zweiter Empfänger E2 und ein dem ersten Empfänger E1 zugeordneter zweiter Sender S2. Der zweite Sender S2 und der zweite Empfänger E2 sind an einen seriellen Schnittstellenausgang des Mikro-Controllers angeschlossen, über den ein derartiger Controller einschließlich der notwendigen Prüfsoftware in der Regel verfügt.

Die Signale des gegenseitigen Datenaustausches bestehen insbesondere aus spezifisch pulsweitenmodulierten Pulsfolgen, die über den ersten Sender S1 störungsfrei an den zweiten Empfänger E2 mittels Infrarotstrahlung durch die Ceran-Scheibe CE übertragen werden und zu einer bestimmten Befehlskonstellation im Mikro-Controller MC der Steuereinheit führen; entsprechende Rückmeldungen erfolgen über den zweiten Sender S2 durch Infrarotstrahlung durch die Ceran-Scheibe CE an den ersten Empfänger E1 und somit an die Programmier- und/oder Diagnoseeinheit.

Zur normierten Anpassung ist auf der externen Seite zwischen dem ersten Sender S1 und dem ersten Empfänger E1 einerseits sowie der externen Programmier- und/oder Diagnoseeinheit DE andererseits ein Schnittstellenwandler SW vorgesehen, der die von der Programmier- und oder Diagnoseeinheit DE aus- bzw. eingehenden Signale auf sogenannten TTL-Pegel konvertiert.

Entsprechend unterschiedlichen Einstellungen werden in einer Bedienfront über direkt leuchtende LED-Anzeigen LED1-LED3 beleuchtete Einstellanzeigen einer Kochstellensteuerung oder durch hintergrundbeleuchtete LCD-Anzeigen Betriebsartenanzeigen einer Backofensteuerung aktiviert.

In FIG 2 sind insgesamt drei LED-Anzeigen LED1-LED3 und jeweils ein gesonderter optischer Sender S1 bzw. Sender S2 für jede Schnittstellenseite vorgesehen.

Gemäß FIG 3 kann der Bauteileaufwand dadurch in vorteilhafter Weise gemindert werden, daß erfindungsgemäß eine an sich vorhandene optisch aktive Anzeigevorrichtung, im vorliegenden Fall die erste LED-Anzeigevorrichtung (LED1), als kochstellenseitiger Sender der Schnittstelle mitbenutzt ist.

Für den eigentlichen Datenaustausch der Schnittstelle ist in vorteilhafter Weise ein hochfrequentes, insbesondere jeweils spezifisch pulsweitenmoduliertes, Wechselsignal f₁ bzw. für die Leuchtaktivierung der LED-Anzeigevorrichtung LED1 ein niederfrequentes Wechselsignal f₂ oder ein Gleichsignal vorgesehen.

Obwohl die Erfindung anhand einer Schnittstelle mit bidirektionaler Datenübertragung beschrieben wurde, ist selbstverständlich auch eine Schnittstelle mit undirektionaler Schnittstelle von der Erfindung mitumfaßt, wenn für den dann nur auf einer Schnittstellenseite vorgesehenen Sender eine an sich vorhandene Anzeigevorrichtung mitbenutzt und mit den Schnittstellen-Signalen gespeist ist.

## Patentansprüche

1. Optische Schnittstelle mit optischer Datenübertragung zwischen einer ersten elektronischen Einrichtung mit zumindest einem Sender (S2) und einer zweiten elektronischen Einrichtung mit zumindest einem Empfänger (E1), wobei für den zumindest einen Sender (S2) eine an sich vorhandene optisch aktive Anzeigevorrichtung (LED1) mitbenutzt ist, die der elektronischen Einrichtung zugeordnet ist.

2. Optische Schnittstelle nach dem vorhergehenden Anspruch mit bidirektionaler optischer Datenübertragung zwischen einer ersten elektronischen Einrichtung mit einem ersten Sender (S1) und einem ersten Empfänger (E1) einerseits und einer zweiten elektronischen Einrichtung mit einem zweiten Sender (S2) und einem zweiten Empfänger (E2) andererseits.

3. Optische Schnittstelle nach zumindest einem der vorhergehenden Ansprüche mit einer mitbenutzten Anzeigevorrichtung in Form einer direkt leuchtenden LED-Anzeige (LED1).

4. Optische Schnittstelle nach zumindest einem der vorhergehenden Ansprüche 1 bzw. 2 mit einer Schnittstelle in Form einer hintergrundbeleuchteten LCD-Anzeige.

5. Optische Schnittstelle nach zumindest einem der vorhergehenden Ansprüche mit einem hochfrequenten, insbesondere pulsweitenmodulierten, Wechselsignal f₁ für die Datenübertragung der optischen Schnittstelle und mit einem niederfrequenten Wechselsignal f₂ für die Leucht-Aktivierung der Anzeigevorrichtung (LED1).

6. Optische Schnittstelle nach zumindest einem der vorhergehenden Ansprüche mit einer ersten elektronischen Einrichtung in Form einer mobilen Programmier- und/oder Diagnoseeinheit (DE).

7. Optische Schnittstelle nach zumindest einem der vorhergehenden Ansprüche mit einer zweiten elektronischen Einrichtung in Form einer optoelektronischen Kochstellensteuerung (MC).

8. Optische Schnittstelle nach zumindest einem der vorhergehenden Ansprüche 1-7 wobei der Empfänger (E1 bzw.E2) einer Sende-und Empfangsebene (S1,E1 bzw.S2,E2), insbesondere der erste Empfänger (E1), jeweils unaktiviert bei aktiviertem Sender (S1 bzw.S2) seiner Sende- und Empfangsebene ist.
